# EUROPEAN PATENT SPECIFICATION

(11) **EP 2 335 977 B1**
(45) Date of publication and mention of the grant of the patent: **24.07.2013**
(21) Application number: 09179594.8
(22) Date of filing: 17.12.2009
(51) Int. Cl.: B60R 3/02

(54) **Foldable step for vehicles**
Klappschwelle für Fahrzeuge
Marchepied pliable pour véhicules

(43) Date of publication of application: 22.06.2011
(73) Proprietor: IVECO MAGIRUS AG, 89079 Ulm (DE)
(72) Inventor: Kainz, Bernhard, 8323 St. Marein/Graz (AT)
(74) Representative: Borsano, Corrado

(56) References cited:
- CN-A- 101 214 801
- CN-A- 101 480 518
- DE-A1- 4 221 171
- US-A1- 2002 189 899

## Description

The present invention relates to a foldable step for vehicles, comprising a step plate and a pivoting device for pivoting the step plate between a retracted position and an unfolded position.

Steps, footboards and the like are often used at rescue vehicles to give access to vehicle compartments and lockers in which rescue equipment is stored. For example such lockers can be located in a lateral portion of a fire engine. When the locker is located at a high position above the ground, accessing the contents of the locker may be difficult. This is especially the case with lockers located above a wheel of the vehicle, because it is difficult for construction-conditioned reasons to locate a step in the area of the wheel housing.

Generally this problem can be solved by providing a foldable step under the locker that unfolds a step plate that can easily be entered from the ground. In a stowage position, the step plate is retracted inside a compartment of the vehicle. Only when the step is used in a rescue mission, when the rescue vehicle is stationary, the step plate is unfolded and lowers to be entered by a person. Examples of known foldable steps for vehicles are disclosed in the German patent application DE 4221171 and in the Chinese patent application CN101214801.

Document DE 4221171 discloses a foldable step for vehicles according to the preamble of claim 1.

However, the known technical solutions for providing foldable steps are unsatisfactory because they are complicated under cinematic aspects and do not match certain requirements. For example, the unfolding process must be conducted fast and reliably, which is not the case with the known foldable steps.

It is therefore an object of the present invention to provide a foldable step for a vehicle of the above kind, especially for use in a rescue vehicle, that comprises a simple construction that allows a fast unfolding process to give access to a vehicle compartment located in a high position above the ground, especially above a wheel housing.

This object is achieved by a foldable step comprising the features of claim 1.

According to the present invention, the pivoting device for pivoting the step plate comprises a rigid arm that is hinged to a structural part of the vehicle, for example, a console fixed on a superstructure of the vehicle. Due to the hinged arrangement, the rigid arm is turnable around a horizontal axis.

At the free end of the rigid arm, the step plate is attached rotably around a turning axis parallel to the rotation axis of the rigid arm. The pivoting device further comprises an abutment plate standing vertically with respect to the rotation axis of the arm and lying, for example, directly on a lateral surface of the arm and being slidable on this surface. Together with the rigid arm, the abutment plate can be turned around the rotation axis of the arm until the abutment plate reaches a first stopper. Beyond this first stopper for the abutment plate, the arm can be turned further until it reaches a second stopper that limits the rotation of the arm. It is clear that during this further turning motion of the rigid arm with respect to the abutment plate, its turning movement is decoupled from the abutment plate itself that is stopped by the first stopper.

The rigid arm and the abutment plate are coupled by a coupling element. After the abutment plate has reached its stopping position at the first stopper, the coupling element allows a further turning movement of the arm with respect to the abutment plate.

For controlling the movement of the step plate during this turning movement of the rigid arm together with (and further without) the abutment plate, a guiding rod is provided that connects the abutment plate with the step plate. The rod is hinged to the abutment plate at a first point being displaced from the turning axis of the rigid arm, and with its other end to the step plate at a second point displaced from the turning axis of the step plate. By this arrangement, the step plate can be turned around its turning axis with respect to the arm when the arm moves beyond the first stopper towards the second stopper, i.e. when it is turned with respect to the abutment plate.

The retracted position of the step plate can be identified with an upright position of the arm in which the step plate is stored within a respective vehicle compartment in a mainly horizontal state. To reach the unfolded position, the arm can be pivoted around its rotation axis to reach a generally horizontal position. During a first phase of this unfolding process, the step plate can mainly keep its angular position with respect to the rigid arm (or being just slightly tilted downwards due to its own weight). During this first phase, the rigid arm and the abutment plate are coupled by the coupling element so that the arm is not turned with respect to the abutment plate. This first phase ends when the abutment plate reaches the first stopper. In the second phase of movement, the rigid arm turns further to move against the second stopper with respect to the abutment plate. During this second phase, the abutment plate shifts the rod with respect to the rigid arm to turn the step plate with respect to the arm. This turning movement can end in a position where the step plate lies flat horizontally on the rigid arm when the arm has reached the second stopper. This means that in the second phase of movement of the rigid arm, the step plate is folded automatically into a horizontal position.

According to one preferred embodiment of the present invention, the coupling element comprises a spring element that is hinged to the abutment plate at a third point and to the rigid arm at a fourth point, in a way that the spring element is compressed during the turning movement of the arm beyond the stopping position of the abutment plate at the first stopper.

It is noted that there are various alternatives for the provision of a spring element. For example, it can be taken into account to use a mechanical spring, gas spring strut or the like as a spring element.

Preferably the first stopper and the second stopper are formed by the same stopping surface or arranged at the same angular position with respect to the rotation axis of the rigid arm.

This means that in the sense of the claims and the present description, the terms "first stopper" and "second stopper" do not necessarily refer to different elements or structural parts of the vehicle but can denote, for example, one stopping means.

According to one preferred embodiment, the first stopper is formed by one side of a stopping block that is fixed to the vehicle structure.

According to another preferred embodiment, the first stopper and the second stopper are formed by different sides of a stopping block that is fixed to the vehicle structure.

In the following the present invention will be further explained with respect to the attached drawings, wherein:
Fig. 1 is a side view of one embodiment of the foldable step according to the present invention in a retracted position of the step plate;
Fig. 2 is a side view of the foldable step in Fig. 1 in an intermediate position between the retracted position of the step plate and an unfolded position;
   and
Fig. 3 shows the foldable step according to Figs. 1 and 2 in a side view in an unfolded position of the step plate.

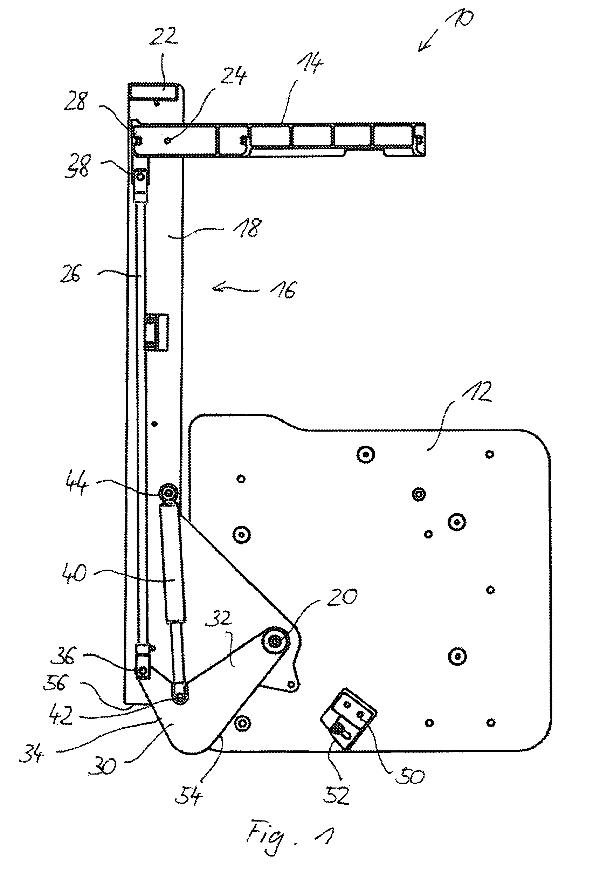

In Fig. 1, the foldable step denoted generally by reference number 10 is attached to a vehicle structure comprising a console 12. Further parts of the vehicle structure are not shown in the figures. The driving direction of the vehicle corresponds to an axis standing vertically to the plane of the drawings. The foldable step is provided to be unfolded and retracted in a lateral direction of the vehicle, which is the left side in the figures. Under the console 12, a wheel housing of the vehicle (not shown) can be provided, whereas in a space arranged over the console 12, a compartment for rescue equipment can be arranged, which may be a locker or the like. The vehicle as such can be a rescue vehicle like a fire engine.

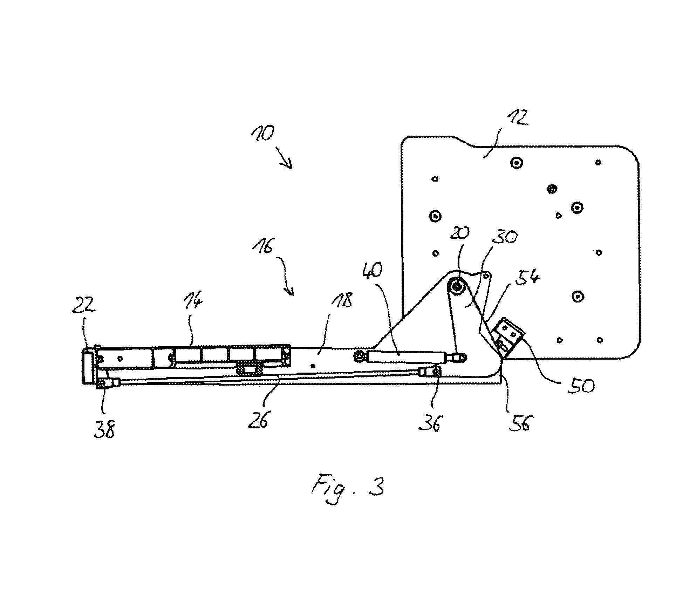

The foldable step 10 comprises a step plate 14 standing horizontally in Fig. 1 and a pivoting device 16 to which the step plate 14 is attached. The pivoting device 16 comprises a mechanism to pivot the step plate 14 from a retracted position shown in Fig. 1 to an unfolded position according to Fig. 3. This mechanism will be described in detail in the following.

The pivoting device 16 comprises a rigid arm 18 standing vertically in the retracted position of the pivoting device 16 in Fig. 1. On its lower end, the arm 18 is connected to the console 12 in a rotatable manner. The arm 18 can turn about a rotation axis 20 being fixed to the console 12 and extending in the driving direction of the vehicle. At the upper free end 22 of the arm 18, the step plate 14 is attached. The step plate 14 is connected to the free end 22 of the arm 18 by a turning axis 24 that stands parallel to the rotation axis 20 of the arm 18. Around this turning axis 24, the step plate 14 can turn with respect to the arm. This turning movement is controlled by a guiding rod 26 extending mainly parallel to the extension direction of the arm 18. The turning axis 24 and the guiding rod 26 are attached to the left rim 28 of the step plate 14 (left in Fig. 1), the upper end of the guiding rod 26 being attached directly to the outer rim 28 of the step plate 14, while the turning axis 24 is displaced inwardly with respect to the upper connection end of the guiding rod 26.

At the lower end of the rigid arm 18, an abutment plate 30 is attached. The abutment plate 30 lies directly on the side surface of the arm 18 and can turn together with the arm 18 about the rotation axis 20 of the arm 18 at the console 12. The abutment plate 30 as such is generally V― shaped, with one arm 32 being connected to the rotation axis 20 with its end and another arm 34 standing almost in a right angle with respect to the first arm 32, the end of the second arm 34 being connected to the lower end of the guiding rod 26. That is, the lower end of the guiding rod 26 is connected to the abutment plate 30 turnable around a first point generally denoted by reference number 36, and being hinged at its upper end at a second turning point 38 at the rim 28 of the plate 14. When the abutment plate 30 is turned around the rotation axis 20 in a clockwise direction in Fig. 1 with respect to the rigid arm 18 (i.e. the arm 18 is held in a fixed position), the guiding rod 26 is shifted towards the free end 22 of the arm 18 to transmit a torque to the step plate 14 around its turning axis 24, which will be described later.

The abutment plate 30 and the rigid arm 18 are additionally coupled by a spring element 40 extending from a central part of the abutment plate 30 towards the free end 22 of the rigid arm 18. The spring element 40 is hinged to the abutment plate 30 at the third point 42 where the two arms 32 and 34 of the abutment plate 30 are connected, which could be described as the "elbow" of the abutment plate 30, with its lower end, while its upper end is hinged to the rigid arm 18 at a forth point 44. When the arm 18 is turned freely around its rotation axis 20, the abutment plate 30 is coupled to the arm 18 by the spring element 40 so that it follows this movement. However, when the abutment plate 30 encounters a mechanical resistance during this movement 18 of the arm in a counterclockwise direction, the abutment plate 30 is pressed towards the free end of the arm 22 against the dampening force of the spring element 40. The spring element 40 has therefore the function to dampen a turning movement of the abutment plate 30 with respect to the rigid arm 18.

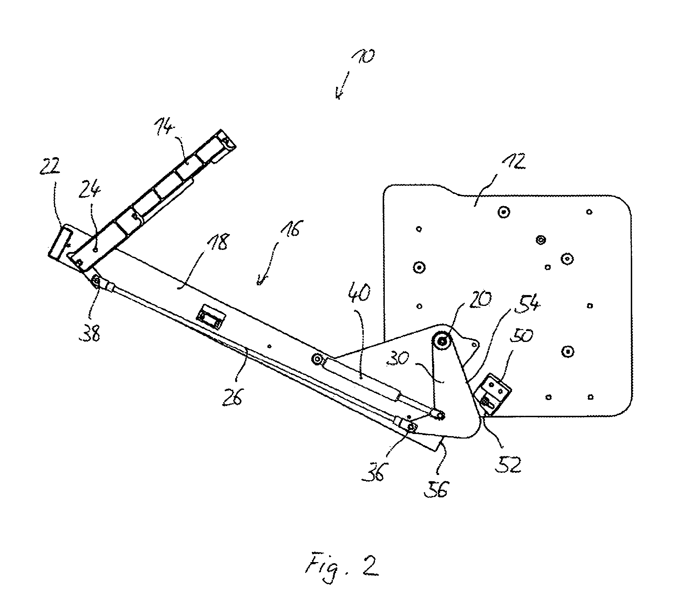

On the surface of the console 12 on which the rigid arm is provided, a stopper plate 50 is flanged. This stopper plate 50 provides a stopping surface 52 to which a free side 54 of the arm 32 of the abutment plate 30 can abut, as well as a lower end surface 56 of the rigid arm 18. It is noted that in the position of Fig. 1, the free surface 54 of the abutment plate 30 and the lower free surface 56 of the rigid arm 18 are displaced by a certain angle around the rotation axis 20. This means that when the rigid arm 18 and the abutment plate 30 are turned together in a counter clockwise direction, as described above, the free surface 54 of the abutment plate 30 will reach the stopping surface 52 of the stopping plate 50 first. This situation is shown in Fig. 2.

Fig. 2 shows the contact position between the free surface 54 of the abutment plate 30 and the stopping surface 52 of the stopping plate 50. This position marks the maximum turning position of the abutment plate 30 around the rotation axis 20 in the counterclockwise direction, since the abutment plate 30 cannot be turned any further and is stopped by the stopper plate 50. However, due to the coupling of the abutment plate 30 to the arm 18 by the compressible spring element 40, the rigid arm 18 can turn further in the counter clockwise direction, since the lower free end surface 56 of the rigid arm 18 has not reached the stopper plate 50 yet. Fig. 2 shows a situation where the rigid arm 18 has already been slightly turned with respect to the abutment plate 30, with the effect that the guiding rod 26 has been displaced towards the free end 22 of the arm 18, turning the step plate 14 with respect to the arm 18 and folding it towards to the console 12. When the rigid arm 18 is further turned around its rotation axis 20 with respect to the abutment plate 30, the step plate 14 is further folded against the arm 18, finally reaching the position of Fig. 3 wherein the free lower end 56 of the rigid arm 18 has also reached the stopped plate 50. Fig. 3 shows the completely unfolded position of the step plate 14. To reach the retracted position of Fig. 1 again, the process described above is carried out in the backward direction, i.e. the rigid arm 18 is turned in the clockwise direction around the rotation axis 20 first while the abutment plate 30 stays in the abutted position to the stopping surface 52 of the stopping plate 50. After the spring element 40 is extracted completely, it carries the abutment plate 30 during the further turning movement of the rigid arm 18 so that both parts, i.e. the abutment plate 30 and the rigid arm 18 are pivoted together.

In the present embodiment the stopping surface 52 serves as one stopper for the abutment plate 30 as well as for the rigid arm, because the stopping plate 50 has a thickness great enough to serve as a stopper for both elements 18 and 30. However, it is possible to provide different stoppers for the abutment plate 30 and the rigid arm 18, or at least different stopping surfaces 52 for the free surface 54 of the abutment plate 30 and the free lower surface 56 of the arm 18. To carry out the kinetic movement from the retracted position in Fig. 1 to reach the unfolded position in Fig. 3, it should only be provided that the rigid arm 18 can carry out a further turning movement to reach a second stopper beyond the abutment position of the abutment plate 30 at a first stopper, with the effect that after finishing a first turning phase in which the rigid arm 18 and the abutment plate 30 are moved together, a second turning phase follows in which the rigid arm 18 carries out a turning movement with respect to the abutment plate 30 to unfold the turning step 14. However, as already mentioned, the first stopper and the second stopper can be identical or at least be arranged at the same angular position with respect to the rotation axis 20. The first stopper and the second stopper can be represented by different sides of a stopping block or stopping plate 50, unlike in the present embodiment, wherein the stopping surface 52 represents the first and second stopper at the same time.

## Claims

1. Foldable step (10) for vehicles, comprising a step plate (14) and a pivoting device (16) for pivoting the step plate (14) between a retracted position and an unfolded position, said pivoting device (16) comprising a rigid arm (18) hinged to a vehicle structure turnable around a horizontal axis (20), said step plate (14) being attached to the free end of the rigid arm (18) turnable around a second axis (24) arranged parallel to said rotation axis (20) of the rigid arm (18),
said foldable step being **characterized in that** said pivoting device (16) further comprises an abutment plate (30) standing vertically with respect to said rotation axis (20) of the rigid arm (18) and being turnable together with the rigid arm (18) around its rotation axis (20) up to reach a first stopper (50) at the vehicle structure, said first stopper defining a stopping position of the abutment plate, said foldable step being furthermore **characterised by** a coupling element coupling said rigid arm (18) with said abutment plate and allowing a turning movement of the rigid arm (18) with respect to the abutment plate (30), said rigid arm (18) being turnable beyond said stopping position of the abutment plate (30) up to reach a stopping position of said rigid arm defined by said first stopper or by a second stopper at the vehicle structure different from said first stopper (50), said pivoting device (16) further comprising a rod (26) for connecting the abutment plate (30) with the step plate (14), said rod (26) being hinged to the abutment plate (30) at a first point (36) displaced from the rotation axis (20) of the rigid arm (18) and being hinged with its other end to the step plate (14) at a second point (38) displaced from the turning axis (24) of the step plate (14).

2. Foldable step according to claim 1, **characterized in that** said coupling element comprises a spring element (40) being hinged to the abutment plate (30) at a third point (42) displaced from the rotation axis (20) of the rigid arm (18) on one hand and being hinged to the rigid arm (18) at a fourth point (44), in a way that the spring element (40) is compressed during the turning motion of the rigid arm (18) beyond the stopping position of the abutment plate (30) at the first stopper (50).

3. Foldable step according to claim 2, **characterized in that** the first stopper is formed by one side of a stopping block (50) that is fixed to the vehicle structure.

4. Foldable step according to claim 1 or 2, **characterized in that** the first stopper and the second stopper are formed by different sides of a stopping block (50) that is fixed to the vehicle structure.

## Patentansprüche

1. Klappbare Stufe (10) für Fahrzeuge, umfassend eine Trittplatte (14) und eine Schwenkeinrichtung (16) zum Verschwenken der Trittplatte (14) zwischen einer zurückgezogenen Stellung und einer ausgeklappten Stellung, wobei die Schwenkvorrichtung (16) einen starren Arm (18) umfasst, der an eine Fahrzeugstruktur um eine horizontale Achse (20) herum drehbar angelenkt ist, wobei die Trittplatte (14) an dem freien Ende des starren Arms (18) um eine parallel zu der Rotationsachse (20) des starren Arms (18) angeordnete, zweite Achse (24) drehbar angebracht ist,
wobei die klappbare Stufe **dadurch gekennzeichnet ist, dass** die Schwenkvorrichtung (16) darüber hinaus eine Anlageplatte (30) umfasst, die vertikal mit Bezug auf die Rotationsachse (20) des starren Arms (18) steht und zusammen mit dem starren Arm (18) um dessen Rotationsachse (20) so weit drehbar ist, dass sie einen ersten Anschlag (50) an der Fahrzeugstruktur erreicht, wobei der erste Anschlag eine Anschlagposition der Anlageplatte definiert, wobei die klappbare Stufe darüber hinaus **gekennzeichnet ist durch** eine Kopplungselement, das den starren Arm (18) mit der Anlageplatte koppelt und eine Drehbewegung des starren Arms (18) mit Bezug auf die Anlageplatte (30) zulässt, wobei der starre Arm (18) über die Anschlagposition der Anlageplatte (30) hinaus so weit drehbar ist, dass er eine Anschlagposition des starren Arms erreicht, die **durch** den ersten Anschlag oder **durch** einen zweiten Anschlag an der Fahrzeugstruktur, der sich von dem ersten Anschlag (50) unterscheidet, definiert ist, wobei die Schwenkvorrichtung (16) ferner einen Stab (26) zum Verbinden der Anlageplatte (30) mit der Trittplatte (14) umfasst, wobei der Stab (26) an der Anlageplatte (30) an einem ersten Punkt (36), der von der Rotationsachse (20) des starren Arms (18) verschoben ist, angelenkt ist, und mit seinem anderen Ende an der Trittplatte (14) an einem zweiten Punkt (38), der von der Drehachse (24) der Trittplatte (14) verschoben ist, angelenkt ist.

2. Klappbare Stufe nach Anspruch 1,
**dadurch gekennzeichnet, dass** das Kopplungselement ein Federelement (40) umfasst, das an der Anlageplatte (30) an einem dritten Punkt (42), der von der Rotationsachse (20) des starren Arms (18) verschoben ist, einerseits angelenkt ist, und an dem starren Arm (18) an einem vierten Punkt (44) angelenkt ist, auf eine Weise, dass das Federelement (40) während der Drehbewegung des starren Arms (18) über die Anschlagposition der Anlageplatte (30) an dem ersten Anschlag (50) hinaus zusammengedrückt wird.

3. Klappbare Stufe nach Anspruch 2,
**dadurch gekennzeichnet, dass** der erste Anschlag durch eine Seite eines Anschlagblocks (50) gebildet ist, der an der Fahrzeugstruktur befestigt ist.

4. Klappbare Stufe nach Anspruch 1 oder 2,
**dadurch gekennzeichnet, dass** der erste Anschlag und der zweite Anschlag durch unterschiedliche Seiten eines an der Fahrzeugstruktur befestigten Anschlagblocks (50) gebildet sind.

## Revendications

1. Marchepied pliable (10) pour véhicules, comprenant une plaque de marchepied (14) et un dispositif pivotant (16) pour faire pivoter la plaque de marchepied (14) entre une position rétractée et une position dépliée, ledit dispositif pivotant (16) comprenant un bras rigide (18) relié en charnière à une structure de véhicule pouvant tourner autour d'un axe horizontal (20), ladite plaque de marchepied (14) étant attachée à l'extrémité libre du bras rigide (18) pouvant tourner autour d'un deuxième axe (24) agencé parallèlement au dit axe de rotation (20) du bras rigide (18),
ledit marchepied pliable étant **caractérisé en ce que** ledit dispositif pivotant (16) comprend en outre une plaque de butée (30) verticale par rapport au dit axe de rotation (20) du bras rigide (18) et pouvant tourner solidairement avec le bras rigide (18) autour de son axe de rotation (20) jusqu'à atteindre une première butée (50) à la structure de véhicule, ladite première butée définissant une position d'arrêt de la plaque de butée,
ledit marchepied pliable étant en outre **caractérisé par** un élément de couplage couplant ledit bras rigide (18) à ladite plaque de butée et permettant un mouvement de rotation du bras rigide (18) par rapport à la plaque de butée (30), ledit bras rigide (18) pouvant tourner au-delà de ladite position d'arrêt de la plaque de butée (30) jusqu'à atteindre une position d'arrêt dudit bras rigide définie par ladite première butée ou par une deuxième butée à la structure de véhicule différente de ladite première butée (50), le dispositif pivotant (16) comprenant en outre une tige (26) pour relier la plaque de butée (30) à la plaque de marchepied (14), ladite tige (26) étant reliée en charnière à la plaque de butée (30) à un premier point (36) déplacé par rapport à l'axe de rotation (20) du bras rigide (18) et étant reliée en charnière à son autre extrémité à la plaque de marchepied (14) à un deuxième point (38) déplacé par rapport à l'axe de rotation (24) de la plaque de marchepied (14).

2. Marchepied pliable selon la revendication 1, **caractérisé en ce que** ledit élément de couplage comprend un élément de ressort (40) relié en charnière à la plaque de butée (30) à un troisième point (42) déplacé par rapport à l'axe de rotation (20) du bras rigide (18) d'une part et relié en charnière au bras rigide (18) à un quatrième point (44), de telle manière que l'élément de ressort (40) soit compressé au cours du mouvement de rotation du bras rigide (18) au-delà de la position d'arrêt de la plaque de butée (30) à la première butée (50).

3. Marchepied pliable selon la revendication 2, **caractérisé en ce que** la première butée est formée par un côté d'un bloc d'arrêt (50) qui est fixé à la structure de véhicule.

4. Marchepied pliable selon la revendication 1 ou 2, **caractérisé en ce que** la première butée et la deuxième butée sont formées par des côtés différents d'un bloc d'arrêt (50) qui est fixé à la structure de véhicule.
